# FASCICULE DE BREVET EUROPEEN

(11) **EP 2 224 836 B1**
(45) Date de publication et mention de la délivrance du brevet: **18.06.2014**
(21) Numéro de dépôt: 08872042.0
(22) Date de dépôt: 21.11.2008
(51) Int. Cl.: B67D 7/64, B67D 7/84

(54) **TRANSBORDEUR ÉQUIPÉ D'AU MOINS DEUX SYSTÈMES DE POMPAGE COOPÉRANT AVEC AU MOINS UN CONTENEUR FIXE**
ÜBERTRAGUNGSFÖRDERER MIT MINDESTENS ZWEI PUMPENSYSTEMEN, DIE MIT MINDESTENS EINEM FIXIERTEN BEHÄLTER INTERAGIEREN
TRANSFER CONVEYOR INCLUDING AT LEAST TWO PUMPING SYSTEMS INTERACTING WITH AT LEAST ONE FIXED CONTAINER

(30) Priorité: 21.11.2007 FR 0708166
(43) Date de publication de la demande: 08.09.2010
(73) Titulaire: MERIM SERVICES, 36800 Saint Gaultier (FR)
(72) Inventeur: MULLERIS, Jean-Jacques, F-92200 Neuilly sur Seine (FR)
(74) Mandataire: Debay, Yves
(86) Numéro de dépôt international: PCT/FR2008/001634
(87) Numéro de publication internationale: WO 2009/098388

(56) Documents cités:
- WO-A-99/32023
- US-A- 4 646 793
- US-A- 5 340 471

## Description

La présente invention concerne un transbordeur équipé d'au moins deux systèmes de pompage coopérant avec au moins un conteneur fixe pour réaliser des opérations de transport et de transvasement de liquides alimentaires, en particulier, de l'huile alimentaire fraîche ou usagée.

Pour transporter des liquides alimentaires usagés depuis leur lieu d'utilisation jusqu'au conteneur de stockage, il est connu d'utiliser un transbordeur constitué d'un récipient mobile monté sur deux roues et un point d'appui. Le transbordeur est muni d'une ouverture de remplissage que l'on positionne sous l'orifice d'évacuation du dispositif de cuisson, par exemple, un bac de friteuse, pour recueillir l'huile usagée. Une fois le dispositif vidangé ou lorsque le transbordeur est plein, ce transbordeur est alors déplacé jusqu'au conteneur de stockage dans lequel son contenu est vidé par l'intermédiaire d'un tuyau de vidange et d'une pompe manuelle ou motorisée.

Le document FR 2 827 590 propose un transbordeur destiné en particulier au transport entre un lieu ou dispositif d'utilisation et un lieu de stockage ou d'évacuation d'huiles, matières grasses ou liquides alimentaires, par exemple des huiles de friture. Le transbordeur pour liquides alimentaires usagés comprend au moins un conteneur mobile muni d'au moins une ouverture de remplissage et d'au moins une conduite de vidange, caractérisé en ce que l'ouverture de remplissage comporte des moyens de connexion étanches aptes à coopérer avec des moyens de fermeture, pour éviter les épanchements de liquide lors des secousses de transport, y compris à la température maximale du liquide alimentaire.

Ce type de technologie étudié pour être tout terrain est destiné au transvasement, par le dessous du dispositif de cuisson, du liquide alimentaire usagé dans le conteneur monté fixement au transbordeur, et au pompage du liquide alimentaire usagé du conteneur vers le dispositif de stockage. La vidange du dispositif de cuisson peut entraîner des risques d'éclaboussures pour l'opérateur si le transbordeur n'a pas été positionné correctement. Par ailleurs, ce type de transbordeur n'est pas adaptable à tout type de dispositif de cuisson et cela pose problème lors des changements de modèles des dispositifs de cuisson. En outre, le transbordeur est constitué de matériaux métalliques pouvant entraîner des risques de brûlure par contact des opérateurs sur les parois.

Le document US 5 340 471 divulgue un transbordeur similaire.

La présente invention a pour but de pallier un ou plusieurs inconvénients de l'art antérieur et propose un transbordeur équipé d'au moins deux systèmes de pompage coopérant avec au moins un conteneur fixe permettant d'assurer, de façon simple et en toute sécurité, des opérations de transport et de transvasement de liquides alimentaires frais et/ou usagés.

Pour atteindre ce but, la présente invention propose un transbordeur selon la revendication 1.

Selon une particularité, la canne de pompage d'un système de pompage destiné à transvaser un liquide alimentaire usagé d'un dispositif de cuisson dans le conteneur fixe est équipée à son extrémité en contact avec le liquide alimentaire usagé :
- d'un système de sécurité thermique pour empêcher la réalisation des opérations de transvasement de liquide alimentaire usagé du dispositif de cuisson vers le conteneur fixe, au-dessus d'un seuil réglementé de température du liquide alimentaire usagé ; et/ou
- d'un système de mesure de température pour fournir une information représentative de la température du liquide alimentaire du dispositif de cuisson à un opérateur, au moyen d'un dispositif d'affichage ; et/ou
- d'un système de filtrage pour éviter l'introduction de déchets solides indésirables dans le conteneur fixe et venant ou non du dispositif de cuisson ; et/ou
- d'un système d'obturation pour éviter l'écoulement sur le sol des résidus de liquide alimentaire se trouvant dans la canne de pompage lorsque les opérations de transvasement sont terminées.

Selon une autre particularité, le système de mesure de température est à contact direct ou non.

Selon une autre particularité, le système de filtrage est réglé en fonction de la granulométrie des déchets solides acceptés dans le liquide alimentaire usagé à vidanger.

Selon une autre particularité, la canne de pompage d'un système de pompage destiné à transvaser un liquide alimentaire frais provenant d'un conteneur fixe dans un dispositif de cuisson est équipée à son extrémité en contact avec le liquide alimentaire frais :
- d'un système d'obturation pour éviter l'écoulement sur le sol des résidus de liquide alimentaire se trouvant dans la canne de pompage lorsque les opérations de transvasement sont terminées ; et/ou
- d'un clapet anti-retour pour éviter de polluer un liquide alimentaire frais du conteneur fixe avec un liquide alimentaire usagé lorsque l'opérateur effectue un complément de liquide alimentaire frais dans son dispositif de cuisson.

Selon une autre particularité, la première conduite est flexible et la deuxième conduite est rigide ou flexible et est munie ou non d'un système de connexion rapide anti-débordement à l'extrémité en contact avec un orifice de remplissage ou de vidange du conteneur fixe.

Selon une autre particularité, le conteneur coopérant avec le transbordeur est fixé à la structure du transbordeur de façon à ce qu'il soit disposé sur la partie inférieure de la structure du transbordeur et constitué d'au moins un matériau assez rigide pour contenir un volume déterminé de liquide alimentaire soit frais soit usagé.

Selon une autre particularité, le conteneur coopérant avec le transbordeur est fixé à la structure du transbordeur de façon à ce qu'il soit disposé sur la partie inférieure de la structure du transbordeur, constitué d'au moins un matériau assez rigide et séparé en deux volumes distincts destinés à recevoir respectivement un liquide alimentaire frais et un liquide alimentaire usagé.

Selon une autre particularité, dans le cas où le transbordeur coopère avec deux conteneurs fixes, les conteneurs fixes sont fixés à la structure du transbordeur et constitué d'au moins un matériau assez rigide de façon à ce que le premier conteneur disposé sur la partie inférieure de la structure du transbordeur et empilé sous le deuxième conteneur reçoive un liquide alimentaire usagé et le deuxième conteneur fixe empilé sur le premier conteneur fixe reçoive un liquide alimentaire frais.

Un autre but est atteint en proposant une utilisation du transbordeur, caractérisée en ce que le transbordeur muni d'au moins deux systèmes de pompage coopérant avec au moins un conteneur fixe est utilisé pour :
- transporter le ou les conteneur(s) fixe(s), selon un premier circuit allant d'un lieu d'utilisation du liquide alimentaire à un lieu de stockage de liquide alimentaire usagé, ou selon un deuxième circuit allant du lieu de stockage de liquide alimentaire usagé à un lieu de stockage de liquide alimentaire frais ou selon un troisième circuit allant du lieu de stockage de liquide alimentaire frais au lieu d'utilisation du liquide alimentaire frais ;
- vidanger, au moyen d'un système de pompage un liquide alimentaire usagé provenant d'un dispositif de cuisson soit dans un conteneur fixe avec volume séparable disposé sur le dispositif de maintien du transbordeur soit dans un premier conteneur fixe disposé sur le dispositif de maintien du transbordeur et empilé sous un deuxième conteneur fixe ;

- remplir, au moyen du même système de pompage, un dispositif de stockage de liquide alimentaire usagé avec le liquide alimentaire usagé provenant soit du conteneur fixe avec volume séparable soit du premier conteneur fixe ;
- remplir, au moyen d'un autre système de pompage, un dispositif de cuisson avec un liquide alimentaire frais provenant soit du deuxième volume du conteneur fixe avec volume séparable disposé sur le dispositif de maintien du transbordeur soit du deuxième conteneur fixe empilé sur le premier conteneur fixe ;
- vidanger, au moyen de l'autre système de pompage, le liquide alimentaire frais provenant d'un dispositif de stockage de liquide alimentaire frais soit dans le deuxième volume du conteneur fixe avec volume séparable soit dans le deuxième conteneur fixe.

Selon une autre particularité, pour réaliser des opérations de transvasement de liquide alimentaire frais ou usagé, un opérateur connecte une extrémité de la deuxième conduite dont l'autre extrémité est reliée au système de pompage correspondant à l'orifice de remplissage ou de vidange du conteneur fixe puis plonge l'extrémité de la canne de pompage correspondante dans le dispositif de cuisson ou dans le dispositif de stockage de liquide alimentaire usagé ou encore dans le dispositif de stockage de liquide alimentaire frais en fonction de l'opération à réaliser, et actionne le système de pompage correspondant, dans le sens souhaité.

L'invention sera mieux comprise et d'autres buts, caractéristiques, détails et avantages de celle-ci apparaîtront plus clairement au cours de la description explicative qui va suivre faite en référence aux figures annexées données à titre d'exemples non limitatifs dans lesquelles :
- la figure 1 représente un transbordeur muni de deux systèmes de pompage reliés respectivement à une canne de pompage avant fixation d'un conteneur fixe : les figures 1a, 1b représentant des vues en perspective, la figure 1c représentant une vue en perspective et la figure 1d représentant une vue de côté ;
- la figure 2 représente une vue en perspective d'un transbordeur muni de deux systèmes de pompage, reliés respectivement à une canne de pompage, coopérant avec un conteneur fixe séparé en deux volumes distincts ;
- la figure 3 représente une vue en perspective d'un transbordeur muni de deux systèmes de pompage, reliés respectivement à une canne de pompage, coopérant avec deux conteneurs fixes distincts empilés comportant respectivement un seul volume.

L'invention va à présent être décrite en référence aux figures précédemment citées.

Le transbordeur (1) équipé d'au moins deux systèmes de pompage (2a, 2b) est constitué d'une structure mécanique (10) montée fixement sur un système de roues (11). La structure mécanique (10) en forme de chariot est constituée d'une partie inférieure (102) sur le dessous de laquelle est fixé le système de roues (11) et sur le dessus de laquelle est fixé au moins un conteneur (3, 3a, 3b) et d'une partie supérieure (101) permettant à un opérateur de manoeuvrer le transbordeur (1).

De façon avantageuse, la partie supérieure (101) est en forme d'arceau, à hauteur d'homme et solidaire de la structure (10) pour permettre à un opérateur de déplacer le transbordeur (1) sans se baisser.

De façon à assurer un équilibre stable en permanence et à pouvoir immobiliser le transbordeur (1) en toute sécurité, par exemple et de manière non limitative, lors des opérations de transvasement de liquide alimentaire, le système de roues (11) est constitué de 2, 3 ou 4 roues omnidirectionnelles ou unidirectionnelles et pouvant être munies d'un système de freinage (110) de type connu.

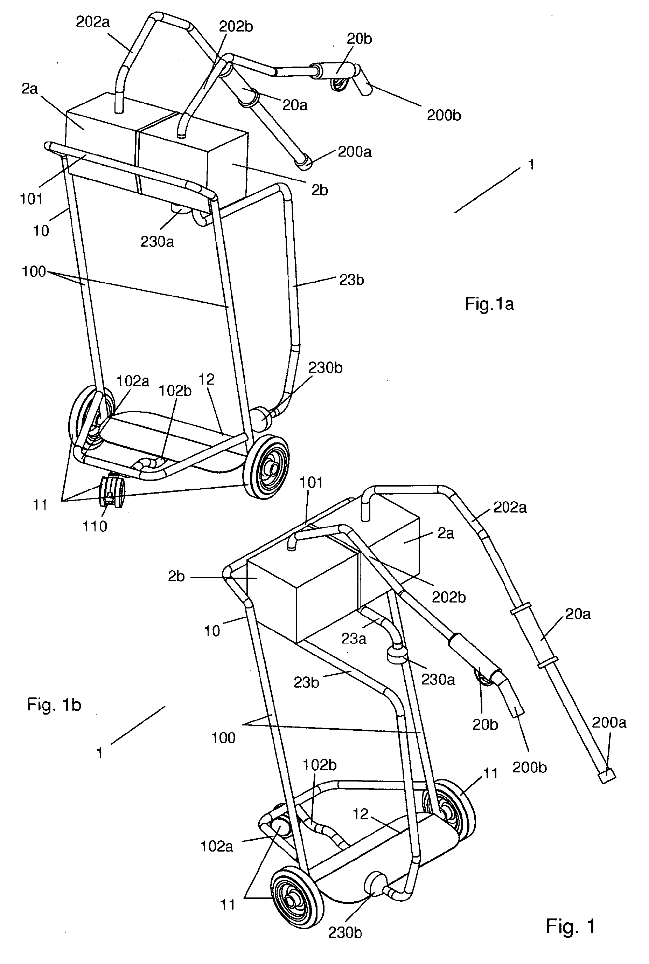

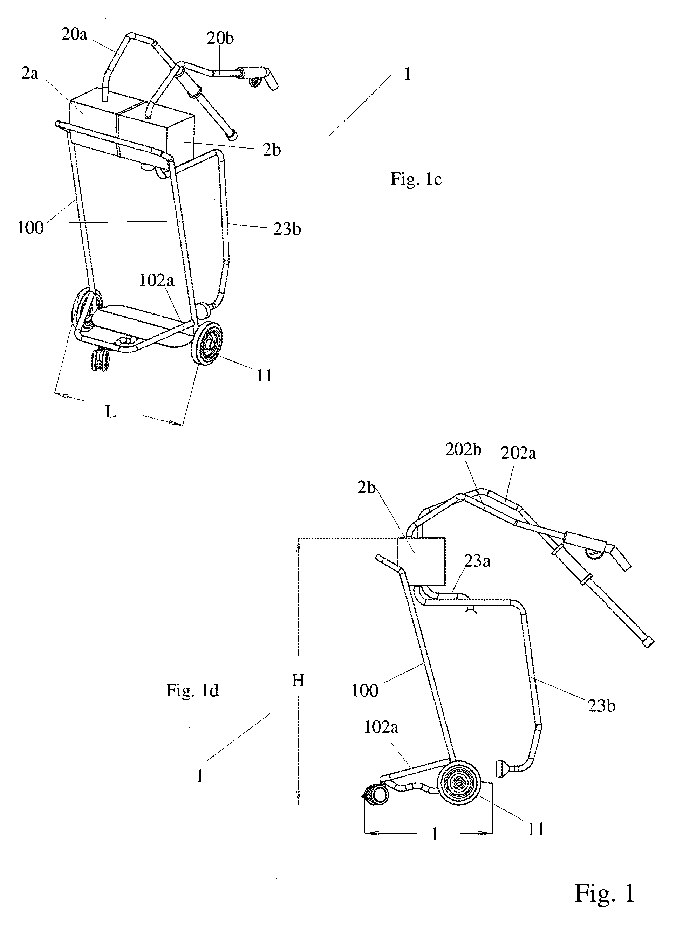

Dans un mode de réalisation préféré illustré aux figures 1 à 3, la structure mécanique (10) du transbordeur (1) est constituée de deux éléments parallèles (100) dont l'extrémité inférieure est fixée respectivement à une roue (11) de façon à ce que l'axe des roues (11) soit perpendiculaire aux éléments parallèles (100). L'autre extrémité, l'extrémité supérieure des éléments parallèles (100) est fixée à un premier arceau pour former la partie supérieure (101) du transbordeur (1). Une plaque support (12), constituant un dispositif de maintien pour au moins un conteneur fixe (3, 3a, 3b), de longueur sensiblement égale à la distance (D) séparant les deux éléments parallèles (100) est également fixée à l'extrémité inférieure des éléments parallèles (100) et perpendiculairement aux éléments parallèles (100) de façon à maintenir le parallélisme des éléments (100) et assurer une certaine rigidité de le structure (10) du transbordeur (1). A proximité de l'extrémité inférieure des éléments parallèles (100) est fixé un second arceau (102a) maintenu en son centre par l'extrémité d'un élément courbé (102b) dont l'autre extrémité est fixée sous et sensiblement au centre de la plaque support (12). Le second arceau (102a) et l'élément courbé (102b) forme la partie inférieure (102) de la structure (10) du transbordeur (1). La courbure de l'élément (102b) est adaptée et étudiée en fonction de la géométrie du conteneur fixe (3, 3a, 3b). La partie inférieure (102) de la structure (10) du transbordeur (1) est également étudiée et adaptée pour que le centre de gravité du conteneur fixe (3, 3a, 3b) s'équilibre sur le transbordeur (1) de façon à ce que l'opérateur n'est pas d'action à mener pour vaincre le poids du conteneur fixe (3, 3a, 3b) lors de son transport. Une troisième roue (11) munie d'un système de freinage (110) est fixée sensiblement au centre du second arceau (102a).

De façon avantageuse, le transbordeur (1) présente une taille minimisée de manière à faciliter son passage dans des endroits exigus ou dans des monte-charges. Dans un exemple de réalisation représenté aux figures 1c et 1d, la structure (10) du transbordeur (1) monté sur son système de roues (11) présente une hauteur (H) sensiblement égale à 910 millimètres, une longueur (L) sensiblement égale à 580 millimètres et une largeur (I) sensiblement égale à 470 millimètres.

Le transbordeur (1) est prévu pour être utilisé avec un ou plusieurs conteneur(s) (3, 3a, 3b) fixé(s) à la structure (10) du transbordeur (1), au moyen de vis de serrage, de façon à ce que le ou les conteneur(s) (3, 3a) soient positionné(s) sur le dessus de la partie inférieure (102) de la structure du transbordeur (1).

Dans le cas où le transbordeur (1) est utilisé avec un conteneur fixe (3), le conteneur (3) coopérant avec le transbordeur (1) est fixé à la structure (10) du transbordeur (1) de façon à ce qu'il soit disposé sur la partie inférieure (102) de la structure (10) du transbordeur (1) et constitué d'au moins un matériau assez rigide pour contenir un volume séparé en deux volumes distincts destinés à recevoir respectivement un liquide alimentaire frais et un liquide alimentaire usagé.

Dans le cas où le transbordeur (1) est utilisé avec plusieurs conteneurs fixes (3a, 3b), dans l'exemple représenté, deux conteneurs fixes (3a, 3b), les conteneurs fixes (3a, 3b) sont fixés à la structure (10) du transbordeur (1) et constitué d'au moins un matériau assez rigide de façon à ce que le premier conteneur (3a), disposé sur la partie inférieure (102) de la structure (10) du transbordeur (1) et empilé sous le deuxième conteneur (3b), reçoive un liquide alimentaire usagé et le deuxième conteneur fixe (3b), disposé sur le premier conteneur (3a), reçoive un liquide alimentaire frais.

Le ou les conteneur(s) (3, 3a, 3b) sont constitués d'au moins un matériau assez rigide, par exemple et de manière non limitative, de type plastique ou de type métallique.

En outre, le transbordeur (1) est muni d'au moins deux systèmes de pompage (2a, 2b) distincts et réversibles, c'est-à-dire soient aptes à fonctionner alternativement en pompage de liquide alimentaire frais et en injection de liquide alimentaire frais soient aptes à fonctionner alternativement en pompage de liquide alimentaire usagé et en injection de liquide alimentaire usagé. Les systèmes de pompage (2a, 2b) sont fixés à la structure (10) à proximité de la partie supérieure (101) de la structure (10) précédemment décrite. Les systèmes de pompage (2a, 2b) distincts correspondent à des circuits de pompage distincts, par exemple et de manière non limitative, un unique moteur avec autant de cellules de pompage que de systèmes de pompage. Par exemple et de manière non limitative, deux systèmes de pompages (2a, 2b) distincts correspondent à un seul moteur avec deux cellules de pompage, une cellule pour recevoir le liquide alimentaire frais et une autre cellule pour recevoir le liquide alimentaire usagé. En aucun cas, un système de pompage de liquide alimentaire usagé ne servira pour pomper un liquide alimentaire frais et réciproquement.

Chaque système de pompage (2a, 2b) est relié de façon étanche à une canne de pompage (20, 20a, 20b) par une première conduite flexible (202, 202a, 202b) et reliable de façon étanche à un conteneur fixe (3) par une deuxième conduite rigide ou flexible (23, 23a, 23b). L'extrémité de la deuxième conduite (23, 23a, 23b) munie ou non d'un système de connexion rapide anti-débordement (230, 230a, 230b) est mise en contact avec un orifice de remplissage ou de vidange d'un conteneur fixe (3, 3a, 3b), selon les utilisations du transbordeur (1) qui seront décrites dans la suite de la description.

La canne de pompage (20, 20a) d'un système de pompage (2a) destiné à vidanger un liquide alimentaire usagé provenant d'un dispositif de cuisson dans le conteneur fixe (3, 3a) est équipé, à l'extrémité (200, 200a) en contact avec le liquide alimentaire usagé du dispositif de cuisson, d'un système de sécurité thermique de type mécanique, par exemple et de manière non limitative en alliage à mémoire de forme ou de type électrique, par exemple et de manière non limitative, à bilame pour empêcher la réalisation des opérations de vidange de liquide alimentaire usagé du dispositif de cuisson vers le conteneur fixe (3, 3a) au-dessus d'un seuil réglementé de température du liquide alimentaire usagé. Le système de sécurité thermique de type mécanique est, par exemple et de manière non limitative, un clapet d'obturation avec déclencheur par métaux en alliage à mémoire de forme ou en matériau fusible. Le système de sécurité thermique de type électrique est, par exemple et de manière non limitative, un bilame de commande d'interrupteur de pompe.

De façon avantageuse, ce système de sécurité thermique permet d'empêcher les manipulations de liquide alimentaire usagé à haute température pouvant provoquer des risques de brûlures aux opérateurs. En effet, si l'opérateur actionne son système de pompage (2a) pour vidanger un liquide alimentaire usagé à haute température, le système de sécurité thermique est actionné de façon à empêcher la réalisation de la vidange. Lorsque le système de sécurité thermique a été actionné, le système de sécurité thermique est réarmé soit automatiquement soit manuellement avec ou sans changement des éléments de sécurité active pour permettre à nouveau de réaliser des opérations de transvasement avec cette même canne de pompage.

L'extrémité (200, 200a) de la canne de pompage (20, 20a) en contact avec le liquide alimentaire usagé du dispositif de cuisson est équipée d'un système de mesure de température pour fournir une information représentative de la température du liquide alimentaire du dispositif de cuisson à un opérateur. De façon avantageuse, le système de mesure de température permet d'informer de façon simple l'opérateur, par exemple au moyen d'un dispositif d'affichage sur la canne de pompage (20, 20a) de la température du liquide alimentaire usagé à vidanger et ainsi de la possibilité ou non de vidanger le liquide alimentaire usagé. Ce système de mesure de température est de toutes les natures communes de prises des températures à contact direct ou non, par exemple et de manière non limitative, une sonde de température ou une mesure par infrarouge à distance.

De façon à éviter l'introduction de déchets solides indésirables dans le conteneur fixe (3, 3a) et venant ou non du dispositif de cuisson, l'extrémité (200, 200a) de la canne de pompage (20, 20a) est équipée d'un système de filtrage laissant passer les liquides et retenant les solides plus grands qu'une dimension donnée. En effet, le système de filtrage est réglé en fonction de la granulométrie des déchets solides acceptés dans le liquide alimentaire usagé à vidanger.

De façon à éviter l'écoulement sur le sol des résidus de liquide alimentaire se trouvant dans la canne de pompage (20, 20a) lorsque les opérations de transvasement sont terminées, l'extrémité (200, 200a) de la canne de pompage (20, 20a) en contact avec le liquide alimentaire usagé est équipée, par exemple et de manière non limitative, d'un système d'obturation.

La canne de pompage (20b) d'un système de pompage (2b) destiné à transvaser un liquide alimentaire frais provenant d'un conteneur fixe (3, 3b) dans un dispositif de cuisson est équipée à son extrémité en contact avec le liquide alimentaire frais d'un système d'obturation pour éviter l'écoulement sur le sol des résidus de liquide alimentaire se trouvant dans la canne de pompage (20b) lorsque les opérations de transvasement sont terminées et d'un clapet anti-retour pour éviter de polluer un liquide alimentaire frais du conteneur fixe (3, 3b) avec un liquide alimentaire usagé lorsque l'opérateur effectue un complément de liquide alimentaire frais dans son dispositif de cuisson.

Le transbordeur (1) est capable d'embarquer plusieurs systèmes de pompage (2a, 2b) distincts, de manière non limitative, de type manuel ou électrique ou thermique ou pneumatique. Le système de pompage (2) de type manuel est, de manière non limitative, une pompe à palette ou une pompe à membrane ou une pompe siphon. Le système de pompage (2) de type électrique est, de manière non limitative, une pompe à palette ou une pompe à membrane ou une pompe à impulseur flexible ou une pompe péristaltique.

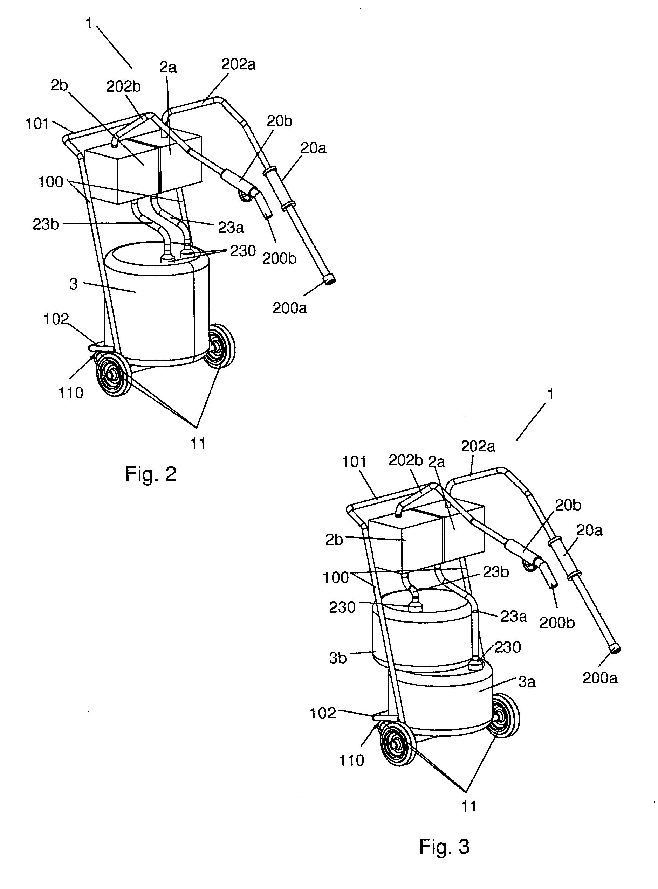

Dans un exemple de réalisation représenté à la figure 2, le transbordeur (1) est équipé de deux systèmes de pompage (2a, 2b) distincts et réversibles. Le premier système de pompage (2a) est relié de façon étanche à la canne de pompage (20a) par une première conduite (202a) et reliable de façon étanche à un orifice de vidange débouchant dans un premier volume d'un conteneur fixe (3) par une deuxième conduite (23a). Le deuxième système de pompage (2b) est relié de façon étanche à une autre canne de pompage (20b) par une autre première conduite (202b) et reliable de façon étanche à un orifice de remplissage débouchant dans un second volume du conteneur fixe (3) par une autre deuxième conduite (23b).

Dans un autre exemple de réalisation représenté à la figure 3, le transbordeur (1) est équipé de deux systèmes de pompage (2a, 2b) distincts et réversibles. Le premier système de pompage (2a) est relié de façon étanche à la canne de pompage (20a) par une première conduite (202a) et reliable de façon étanche à un premier conteneur fixe (3a) disposé sur la partie inférieure (102) de la structure (10) du transbordeur (1) et empilé sous un deuxième conteneur fixe (3b), par une deuxième conduite (23a). Le deuxième système de pompage (2b) est relié de façon étanche à une autre canne de pompage (20b) par une autre première conduite (202b) et reliable de façon étanche au deuxième conteneur fixe (3b) empilé sur le premier conteneur fixe (3a) par une autre deuxième conduite (23b).

Il est à noter que le système de pompage (2b) de liquide alimentaire frais est distinct du système de pompage (2a) de liquide alimentaire usagé.

La présente invention précédemment décrite, permet une ou plusieurs utilisations simples et en toute sécurité du transbordeur (1) coopérant avec un ou plusieurs conteneur(s) fixe(s) (3, 3a, 3b).

Le transbordeur (1) muni d'au moins deux systèmes de pompage (2a, 2b) et d'au moins un conteneur fixe (3, 3a, 3b) est utilisé pour :
- transporter le ou les conteneur(s) fixe(s) (3, 3a, 3b), selon un premier circuit allant d'un lieu d'utilisation du liquide alimentaire à un lieu de stockage de liquide alimentaire usagé, ou selon un deuxième circuit allant du lieu de stockage de liquide alimentaire usagé à un lieu de stockage de liquide alimentaire frais ou selon un troisième circuit allant du lieu de stockage de liquide alimentaire frais au lieu d'utilisation du liquide alimentaire frais ;
- vidanger, au moyen d'un système de pompage (2a) un liquide alimentaire usagé provenant d'un dispositif de cuisson soit dans un conteneur fixe (3), avec volume séparable, disposé sur le dispositif de maintien (12) du transbordeur (1) soit dans un premier conteneur fixe (3a), empilé sous un deuxième conteneur fixe (3b) et disposé sur le dispositif de maintien (12) du transbordeur (1) ;
- remplir, au moyen du même système de pompage (2a), un dispositif de stockage de liquide alimentaire usagé avec le liquide alimentaire usagé provenant soit directement du conteneur fixe (3) avec volume séparable soit du premier conteneur fixe (3a) ;
- remplir, au moyen d'un autre système de pompage (2b) un dispositif de cuisson avec un liquide alimentaire frais provenant soit d'un conteneur fixe (3) avec volume séparable disposé sur le dispositif de maintien (12) du transbordeur (1) soit d'un deuxième conteneur fixe (3b) empilé sur le premier conteneur fixe (3a) ;
- vidanger, au moyen de l'autre système de pompage (2b), le liquide alimentaire frais provenant d'un dispositif de stockage de liquide alimentaire frais soit dans le conteneur fixe (3) avec volume séparable soit dans le deuxième conteneur fixe (3b).

En référence à la figure 2, nous allons décrire à présent un premier exemple d'utilisation d'un transbordeur (1) muni de deux systèmes de pompage (2a, 2b) coopérant avec un conteneur fixe (3) séparé en deux volumes distincts. Le transbordeur (1) muni de deux systèmes de pompage (2a, 2b) coopérant avec ledit conteneur fixe (3) séparé en deux volumes distincts est utilisé pour vidanger, au moyen du premier système de pompage (2a), un liquide alimentaire usagé provenant d'un dispositif de cuisson vers le premier volume du conteneur fixe (3) disposé sur le dispositif de maintien (12) du transbordeur (1) puis transporter le conteneur fixe (3), au moyen du transbordeur (1) du lieu d'utilisation du liquide alimentaire au lieu de stockage du liquide alimentaire usagé et, remplir, au moyen du même premier système de pompage (2a), un dispositif de stockage de liquide alimentaire usagé avec le liquide alimentaire usagé provenant du premier volume du conteneur fixe (3).

Une fois le liquide alimentaire usagé du conteneur fixe (3), séparé en deux volumes distincts, transvasé dans le dispositif de stockage de liquide alimentaire usagé, le transbordeur (1), selon le deuxième exemple de réalisation, est utilisé pour transporter le conteneur fixe (3) séparé en deux volumes distincts, au moyen du transbordeur (1), du lieu de stockage de liquide alimentaire usagé au lieu de stockage de liquide alimentaire frais puis vidanger au moyen du deuxième système de pompage (2b), le liquide alimentaire frais provenant d'un dispositif de stockage de liquide alimentaire frais dans le deuxième volume du conteneur fixe (3) séparé en deux volumes distincts et transporter le conteneur fixe (3) séparé en deux volumes distincts, au moyen du transbordeur (1), du lieu de stockage de liquide alimentaire frais au lieu d'utilisation du liquide alimentaire et remplir, au moyen du deuxième système de pompage (2b), un dispositif de cuisson avec un liquide alimentaire frais provenant du deuxième volume du conteneur fixe (3) séparé en deux volumes distincts disposé sur le dispositif de maintien (12) du transbordeur (1).

En référence à la figure 3, nous allons décrire à présent un deuxième exemple d'utilisation d'un transbordeur (1) muni de deux systèmes de pompage (2a, 2b) distincts et coopérant avec deux conteneurs fixes (3a, 3b) empilés l'un sur l'autre. Le transbordeur (1) muni de deux systèmes de pompage (2a, 2b) distincts et coopérant avec deux conteneurs fixes (3a, 3b) empilés l'un sur l'autre de façon à ce que le premier conteneur (3a) soit sous le deuxième conteneur fixe (3b) est utilisé pour vidanger, au moyen du premier système de pompage (2a), un liquide alimentaire usagé provenant d'un dispositif de cuisson vers le premier conteneur fixe (3a) disposé sur le dispositif de maintien (12) du transbordeur (1) puis remplir, au moyen du deuxième système de pompage (2b), le dispositif de cuisson avec du liquide alimentaire frais provenant du deuxième conteneur fixe (3b) empilé sur le premier conteneur fixe (3a) puis transporter les conteneurs fixes (3a, 3b) du lieu d'utilisation du liquide alimentaire au lieu de stockage du liquide alimentaire usagé et, remplir, au moyen du même premier système de pompage (2a), un dispositif de stockage de liquide alimentaire usagé avec le liquide alimentaire usagé du premier conteneur fixe (3a).

Les conteneurs fixes (3a, 3b) empilés l'un sur l'autre peuvent être transportés au moyen du transbordeur (1) vers le lieu de stockage du liquide alimentaire frais pour vidanger, au moyen du deuxième système de pompage (2b), le liquide alimentaire frais provenant du dispositif de stockage de liquide alimentaire frais dans le deuxième conteneur (3b).

Il est à noter que pour réaliser des opérations de transvasement de liquide alimentaire frais ou usagé, un opérateur connecte une extrémité de la deuxième conduite (23, 23a, 23b) dont l'autre extrémité est reliée au système de pompage correspondant (2a, 2b) à l'orifice de remplissage ou de vidange du conteneur fixe (3, 3a, 3b) puis plonge l'extrémité (200, 200a, 200b) de la canne de pompage correspondante (2a, 2b) dans le dispositif de cuisson ou dans le dispositif de stockage de liquide alimentaire usagé ou encore dans le dispositif de stockage de liquide alimentaire frais en fonction de l'opération à réaliser, et actionne le système de pompage correspondant (2a, 2b), selon le sens souhaité.

Pour des raisons de sécurité et de législation, dans le cas d'une opération de vidange d'un liquide alimentaire usagé provenant du dispositif de cuisson dans le conteneur fixe (3, 3a), il est nécessaire d'attendre le refroidissement du liquide alimentaire usagé après cuisson avant de réaliser cette opération de vidange. L'opérateur peut obtenir une information de la température du liquide alimentaire usagé au moyen du système de mesure de température prévu à l'extrémité de la canne de pompage (2a) en contact avec le liquide alimentaire usagé et juger de la possibilité d'effectuer ou non cette opération de vidange.

Si l'opérateur ne respecte pas la température de vidange réglementée, le système de sécurité thermique prévue à l'extrémité de la canne de pompage (2a) en contact avec le liquide alimentaire usagé est actionné de façon à bloquer l'opération de vidange.

Un des avantages de l'invention est que le transbordeur (1) muni d'au moins deux systèmes de pompage (2a, 2b) permet d'assurer simplement et en toute sécurité la réalisation d'opération de transport d'au moins un conteneur fixe (3, 3a, 3b), de transvasement de liquide alimentaire usagé au moyen d'un système de pompage (2a) et/ou de transvasement de liquide alimentaire frais au moyen d'un autre système de pompage (2b). Dans le cas d'opération de transport simultané de liquide alimentaire usagé et de liquide alimentaire frais grâce à un conteneur fixe (3) séparé en deux volumes, ou deux conteneurs fixes (3a, 3b) distincts empilés, un des avantages de l'invention est de respecter la séparation absolue des circuits entre liquide alimentaire frais et liquide alimentaire usagé, en conformité avec la réglementation.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Transbordeur (1) équipé d'au moins deux systèmes de pompage (2a, 2b) coopérant avec au moins un conteneur fixe (3, 3a, 3b), le transbordeur comprenant une structure mécanique (10) équipée de roues (11), un dispositif de maintien (12) sur lequel est fixé ledit au moins un conteneur fixe (3, 3a, 3b), la partie supérieure (101) de ladite structure (10) permettant à un opérateur de manoeuvrer ledit transbordeur (1) pour transporter ledit au moins un conteneur fixe (3, 3a, 3b); et chaque système de pompage (2a, 2b) étant fixé à la structure (10), à proximité de la partie supérieure (101) de la structure (10), relié de façon étanche à une canne de pompage (20, 20a, 20b) par une première conduite (202, 202a, 202b) et reliable de façon étanche audit au moins un conteneur fixe (3, 3a, 3b) par une deuxième conduite (23, 23a, 23b) pour réaliser des opérations de transvasement de liquide alimentaire **caractérisé en ce que** chaque système de pompage (2a, 2b) est réversible, de type manuel ou électrique ou thermique ou pneumatique, l'un pour les liquides alimentaires frais et l'autre ou l'un des autres pour les liquides alimentaires usagés, le système de pompage (2b) de liquides alimentaires frais étant distinct du système de pompage (2a) de liquides alimentaires usagés.

2. Transbordeur (1) selon la revendication 1, **caractérisé en ce que** la canne de pompage (20, 20a) d'un système de pompage (2a) destiné à transvaser un liquide alimentaire usagé d'un dispositif de cuisson dans le conteneur fixe (3, 3a) est équipée à son extrémité en contact avec le liquide alimentaire usagé :
- d'un système de sécurité thermique pour empêcher la réalisation des opérations de transvasement de liquide alimentaire usagé du dispositif de cuisson vers le conteneur fixe (3, 3a), au-dessus d'un seuil réglementé de température du liquide alimentaire usagé ; et/ou
- d'un système de mesure de température pour fournir une information représentative de la température du liquide alimentaire du dispositif de cuisson à un opérateur, au moyen d'un dispositif d'affichage ; et/ou
- d'un système de filtrage pour éviter l'introduction de déchets solides indésirables dans le conteneur fixe (3, 3a) et venant ou non du dispositif de cuisson ; et/ou
- d'un système d'obturation pour éviter l'écoulement sur le sol des résidus de liquide alimentaire se trouvant dans la canne de pompage (20, 20a) lorsque les opérations de transvasement sont terminées.

3. Transbordeur (1) selon la revendication 2, **caractérisé en ce que** le système de mesure de température est à contact direct ou non.

4. Transbordeur (1) selon la revendication 2, **caractérisé en ce que** le système de filtrage est réglé en fonction de la granulométrie des déchets solides acceptés dans le liquide alimentaire usagé à vidanger.

5. Transbordeur (1) selon la revendication 1, **caractérisé en ce que** la canne de pompage (20b) d'un système de pompage (2b) destiné à transvaser un liquide alimentaire frais provenant d'un conteneur fixe (3, 3b) dans un dispositif de cuisson est équipée à son extrémité en contact avec le liquide alimentaire frais :
- d'un système d'obturation pour éviter l'écoulement sur le sol des résidus de liquide alimentaire se trouvant dans la canne de pompage (20b) lorsque les opérations de transvasement sont terminées ; et/ou
- d'un clapet anti-retour pour éviter de polluer un liquide alimentaire frais du conteneur fixe (3, 3b) avec un liquide alimentaire usagé lorsque l'opérateur effectue un complément de liquide alimentaire frais dans son dispositif de cuisson.

6. Transbordeur (1) selon une des revendications 1 à 5, **caractérisé en ce que** la première conduite (202, 202a, 202b) est flexible et la deuxième conduite (23, 23a, 23b) est rigide ou flexible et est munie ou non d'un système de connexion rapide anti-débordement (230, 230a, 230b) à l'extrémité en contact avec un orifice de remplissage ou de vidange du conteneur fixe (3, 3a, 3b).

7. Transbordeur (1) selon une des revendications 1 à 6, **caractérisé en ce que** le conteneur (3) coopérant avec le transbordeur (1) est fixé à la structure (10) du transbordeur (1) de façon à ce qu'il soit disposé sur la partie inférieure (102) de la structure (10) du transbordeur (1) et constitué d'au moins un matériau assez rigide pour contenir un volume déterminé de liquide alimentaire soit frais soit usagé.

8. Transbordeur (1) selon une des revendications 1 à 6, **caractérisé en ce que** le conteneur (3) coopérant avec le transbordeur (1) est fixé à la structure (10) du transbordeur (1) de façon à ce qu'il soit disposé sur la partie inférieure (102) de la structure (10) du transbordeur (1), constitué d'au moins un matériau assez rigide et séparé en deux volumes distincts destinés à recevoir respectivement un liquide alimentaire frais et un liquide alimentaire usagé.

9. Transbordeur (1) selon une des revendications 1 à 7, **caractérisé en ce que** dans le cas où le transbordeur (1) coopère avec deux conteneurs fixes (3a, 3b), les conteneurs fixes (3a, 3b) sont fixés à la structure (10) du transbordeur (1) et constitué d'au moins un matériau assez rigide de façon à ce que le premier conteneur (3a) disposé sur la partie inférieure (102) de la structure (10) du transbordeur (1) et empilé sous le deuxième conteneur (3b) reçoive un liquide alimentaire usagé et le deuxième conteneur fixe (3b) empilé sur le premier conteneur fixe (3a) reçoive un liquide alimentaire frais.

10. Utilisation du transbordeur (1) selon une des revendications 1 à 9, **caractérisée en ce que** le transbordeur (1) muni d'au moins deux systèmes de pompage (2a, 2b) coopérant avec au moins un conteneur fixe (3, 3a, 3b) est utilisé pour :
- transporter le ou les conteneur(s) fixe(s) (3, 3a, 3b), selon un premier circuit allant d'un lieu d'utilisation du liquide alimentaire à un lieu de stockage de liquide alimentaire usagé, ou selon un deuxième circuit allant du lieu de stockage de liquide alimentaire usagé à un lieu de stockage de liquide alimentaire frais ou selon un troisième circuit allant du lieu de stockage de liquide alimentaire frais au lieu d'utilisation du liquide alimentaire frais ;
- vidanger, au moyen d'un système de pompage (2a) un liquide alimentaire usagé provenant d'un dispositif de cuisson soit dans un conteneur fixe (3) avec volume séparable disposé sur le dispositif de maintien (12) du transbordeur (1) soit dans un premier conteneur fixe (3a), disposé sur le dispositif de maintien (12) du transbordeur (1) et empilé sous un deuxième conteneur (3b) fixe ;
- remplir, au moyen du même système de pompage (2a), un dispositif de stockage de liquide alimentaire usagé avec le liquide alimentaire usagé provenant soit du conteneur fixe (3) avec volume séparable soit du premier conteneur fixe (3a) ;
- remplir, au moyen d'un autre système de pompage (2b), un dispositif de cuisson avec un liquide alimentaire frais provenant soit du deuxième volume du conteneur fixe (3) avec volume séparable disposé sur le dispositif de maintien (12) du transbordeur (1) soit du deuxième conteneur fixe (3b) empilé sur le premier conteneur fixe (3a) ;
- vidanger, au moyen de l'autre système de pompage (2b), le liquide alimentaire frais provenant d'un dispositif de stockage de liquide alimentaire frais soit dans le deuxième volume du conteneur fixe (3) avec volume séparable soit dans le deuxième conteneur fixe (3b).

11. Utilisation du transbordeur (1) selon la revendication 10, **caractérisée en ce que** pour réaliser des opérations de transvasement de liquide alimentaire frais ou usagé, un opérateur connecte une extrémité de la deuxième conduite (23, 23a, 23b) dont l'autre extrémité est reliée au système de pompage correspondant (2a, 2b) à l'orifice de remplissage ou de vidange du conteneur fixe (3, 3a, 3b) puis plonge l'extrémité (200, 200a, 200b) de la canne de pompage correspondante (2a, 2b) dans le dispositif de cuisson ou dans le dispositif de stockage de liquide alimentaire usagé ou encore dans le dispositif de stockage de liquide alimentaire frais en fonction de l'opération à réaliser, et actionne le système de pompage correspondant (2a, 2b), dans le sens souhaité.

## Patentansprüche

1. Umladevorrichtung (1), die mit mindestens zwei Pumpsystemen (2a, 2b) ausgestattet ist, die mit mindestens einem festen Behälters (3, 3a, 3b) zusammenwirkt, wobei die Umladevorrichtung aufweist: eine mechanische Struktur (10), die mit Rädern (11) ausgestattet ist, eine Haltevorrichtung (12), an der der mindestens eine feste Behälter (3, 3a, 3b) befestigt ist, wobei der obere Abschnitt (101) der Struktur (10) einer Bedienperson ermöglicht, die Umladevorrichtung (1) zu betätigen, um den mindestens einen festen Behälter (3, 3a, 3b) zu transportieren, und wobei jedes Pumpsystem (2a, 2b) an der Struktur (10) in der Nähe des oberen Abschnitts (101) der Struktur (10) befestigt ist, durch eine erste Leitung (202, 202a, 202b) auf dichte Weise mit einem Pumprohr (20, 20a, 20b) verbunden ist und durch eine zweite Leitung (23, 23a, 23b) auf dichte Weise mit dem mindestens einen festen Behälter (3, 3a, 3b) verbindbar ist, um Vorgänge zum Umfüllen eines flüssigen Nahrungsmittels durchzuführen, dadurch gekenntzeichnet, dass jedes Pumpsystem (2a, 2b) umkehrbar ist, vom manuellen ober elektrischen oder Wärme- oder pneumatischen Typ ist, wobei eines für frische flüssige Nahrungsmittel und das andere oder eines der anderen für gebrauchte flüssige Nahrungsmittel vorgesehen ist, wobei sich das System zum Pumpen (2b) von frischen flüssigen Nahrungsmittel von dem System zum Pumpen (2a) von gebrauchten flüssigen Nahrungsmitteln unterscheidet.

2. Umladevorrichtung (1) gemäß Anspruch 1, **dadurch gekennzeichnet, dass** das Pumprohr (20, 20a) eines Pumpsystems (2a), das zum Umfüllen eines gebrauchten flüssigen Nahrungsmittels aus einer Kochvorrichtung in den festen Behälter (3, 3a) an seinem Ende, das mit dem gebrauchten flüssigen Nahrungsmittel in Kontakt ist, ausgestattet list mit:
- einem thermischen Sicherheitssystem zum Verhindern der Durchführung der Vorgänge zum Umfüllen eines gebrauchten flüssigen Nahrungsmittels aus der Kochvorrichtung in den festen Behälter (3, 3a) über einer festgelegten Temperaturschwelle des gebrauchten flüssigen Nahrungsmittels, und/oder
- einem System zur Temperaturmessung, um eine Information, die für die Temperatur des flüssigen Nahrungsmittels der Kochvorrichtung repräsentativ ist, einer Bedienperson mittels einer Anzeigevorrichtung bereitzustellen, und/oder
- einem Filtersystem, um das Einbringen von unerwünschten festen Abfallstoffen in den festen Behälter (3, 3a) zu verhindern, die aus der Kochvorrichtung stammen oder nacht, und/oder
- einem Verschlusssystem, um das Ausströmen der sich in dem Pumprohr (20, 20a) befindenden flüssigen Nahrungsmittelreste auf den Böden zu verhindert, wenn die Umfüllvorgänge beendet sind.

3. Umladevorrichtung (1) gemäß Anspruch 2, **dadurch gekennzeichnet, dass** das Temperatur-Mess-System mit oder ohne direkten Kontakt ist.

4. Umladevorrichtung (1) gemäß Anspruch 2, **dadurch gekennzeichnet, dass** das Filtersystem in Abhangigkeit von der Korngrößenbestimmung der festen Abfallstoffe, die in dem zu entleerenden gebrauchten flüssigen Nahrungsmittel akzeptiert sind, geregelt wind.

5. Umladevorrichtung (1) gemäß Anspruch 1, **dadurch gekennzeichnet, dass** das Pumprohr (20b) eines Pumpsystems (2b), das zum Umfüllen eines aus einem festen Behälter (3, 3b) stammenden frischen flüssigen Nahrungsmittels in eine Kochvorrichtung vorgegehen ist, an seinem Ende, das mit dem frischen flüssigen Nahrungsmittel in Kontakt ist, ausgestattet ist mit:
- einem Verschlusssystem, um das Ausströmen der sich in dem Pumprohr (20b) befindenden flüssigen Nahrungsmittelreste auf den Boden zu verhindern, wenn die Umfüllvorgänge beendet sind, und/oder
- einem Rückschlagventil, um ein Verunreinigen eines frischen flüssigen Nahrungsmittels des festen Behälters (3, 3b) mit einem gebrauchten flüssigen Nahrungsmittel zu verhindern, wenn die Bedienperson ein Zugeben eines frischen flüssigen Nahrungsmittels in ihre Kochvorrichtung durchführt.

6. Umladevorrichtung (1) gemäß einem der Ansprüche 1 bis 5, **dadurch gekennzeichnet, dass** die erste Leitung (202, 202a, 202b) flexibel ist und die zweite Leitung (23, 23a, 23b) steif oder flexibel ist und an dem Ende, das mit einer Öffnung zum Füllen oder zum Entleeren des festen Behälters (3, 3a, 3b) in Kontakt ist, mit einem Anti-Überlauf-Schnellverbindungs-System (230, 230a, 230b) verbunden ist oder nicht.

7. Umladevorrichtung (1) gemäß einem der Ansprüche 1 bis 6, dadurch gekenntzeichnet, dass der Behälter (3), der mit der Umladevorrichtung (1) zusammenwirkt, an der Struktur (10) der Umladevorrichtung (1) derart befestigt ist, dass er an dem unteren Abschnitt (102) der Struktur (10) der Umladevorrichtung (1) angeordnet ist, und mindestens aus einem Material gebildet ist, das ausreichend steif ist, um ein bestimmtes Volumen eines entweder frischen oder gebrauchten flüssigen Nahrungsmittels aufzunehmen.

8. Umladevorrichtung (1) gemäß einem der Ansprüche 1 bis 6, **dadurch gekennzeichnet, dass** der Behälter (3), der mit der Umladevorrichtung (1) zusammenwirkt, an der Struktur (10) der Umladevorrichtung (1) derart befestigt ist, dass der an dem unteren Abschnitt (102) der Struktur (10) der Umladevorrichtung (1) angeordnet ist, aus mindestens einem ausreichend steifen Material gebildet ist und in zwei verschiedene Volumina aufgeteilt ist, die vorgesehen sind, um jeweils ein frisches flüssiges Nahrungsmittel und ein gebrauchtes flüssiges Nahrungsmittel auszunehmen.

9. Umladevorrichtung (1) gemäß einem der Ansprüche 1 bis 7, **dadurch gekennzeichnet, dass** in dem Fall, in dem die Umladevorrichtung (1) mit zwei festen Behältern (3a, 3b) zusammenwirkt, die festen Behälter (3a, 3b) an der Struktur (10) der Umladevorrichtung (1) befestigt sind und aus zumindest einem ausreichend steifen Material gebildet sind, so dass der erste Behälter (3a), der an dem unteren Abschnitt (102) der Struktur (10) der Umladevorrichtung (1) ungeordnet ist und unter den zweiten Behälter (3b) gestapelt ist, ein gebrauchtes flüssiges Nahrungsmittel aufnimmt, und der zweite feste Behälter (3b), der auf den ersten festen Behälter (3a) gestapelt ist, ein frisches flüssiges Nahrungsmittel aufnimmt.

10. Verwendung der Umladevorrichtung (1) gemäß einem der Ansprüche 1 bis 9, **dadurch gekennzeichnet, dass** die mit mindestens zwei Pumpsystemen (2a, 2b) ausgestattete Umladevorrichtung (1), die mit mindestens einem festen Behälter (3, 3a, 3b) zusammenwirkt, verwendet wird, um:
- den oder die festen Behälter (3, 3a, 3b) entlang einem ersten Kreis von einem Verwendungsort des flüssigen Nahrungsmittels zu einem Lagerort des gebrauchten flüssigen Nahrungsmittels oder entlang einem zweiten Kreis von dem Lagerort des gebrauchten flüssigen Nahrungsmittels zu einem Lagerort eines frischen flüssigen Nahrungsmittels oder entlang einem dritten Kreis von dem Lagerort eines frischen flüssigen Nahrungsmittels zu dem Verwendungsort des frischen flüssigen Nahrungsmittels zu transportieren,
- mittels eines Pumpsystems (2a) ein gebrauchtes flüssiges Nahrungsmittel, das aus einer Kochvorrichtung stammt, entweder in einen festen Behälter (3) mit trennbarem Volumen, der an der Haltevorrichtung (12) der Umladevorrichtung (1) angeordnet ist, oder in einen ersten festen Behälter (3a), der an der Haltevorrichtung (12) der Umladevorrichtung (1) angeordnet ist und unter einen zweiten festen Behälter (3b) gestapelt ist, zu entleeren,
- mittels des gleichen Pumpsystems (2a) eine Vorrichtung zum Lagern von gebrauchtem flüssigem Nahrungsmittel mit dem gebrauchten flüssigen Nahrungsmittel zu befüllen, das entweder aus dem festen Behälter (3) mit trennbarem Volumen oder aus dem ersten festen Behälter (3a) stammt,
- mittels eines anderen Pumpsystems (2b) eine Kochvorrichtung mit einem frischen Nahrungsmittel zu befüllen, das entweder aus dem zweiten Volumen des festen Behälters (3) mit trennbarem Volumen, der an der Haltevorrichtung (12) der Umladevorrichtung angeordnet ist, oder aus dem zweiten festen Behälter (3b) stammt, der auf den ersten festen Behälter (3a) gestapelt ist,
- mittels des anderen Pumpsystems (2b) das frische flüssige Nahrungsmittel, das aus einer Vorrichtung zum Lagern eines frischen flüssigen Nahrungsmittels stammt, entweder in das zweite Volumen des festen Behälters (3) mit trennbarem Volumen oder in den zweiten festen Behälter (3b) zu entleeren.

11. Verwendung der Umladevorrichtung (1) gemäß Anspruch 10, **dadurch gekennzeichnet, dass** zum Durchführen von Vorgängen des Umfüllens eines frischen oder gebrauchten flüssigen Nahrungsmittels eine Bedienperson ein Ende der zweiten Leitung (23, 23a, 23b), deren anderes Ende mit dem korrespondierenden Pumpsystems (2a, 2b) verbunden ist, mit der Öffnung zum Füllen oder zum Entleeren des festen Behälters (3, 3a, 3b) verbindet, dann das Ende (200, 200a, 200b) des korrespondierenden Pumprohrs (2a, 2b) in Abhängigkeit von dem durchzuführenden Vorgang in die Kochvorrichtung oder in die Vorrichtung zum Lagern eines gebrauchten flüssigen Nahrungsmittels oder in die Vorrichtung zum Lagern eines frischen flüssigen Nahrungsmittels eintaucht, und das korrespondierende Pumpsystem (2a, 2b) in der gewünschten Richtung betätigt.

## Claims

1. Transfer conveyor (1) equipped with at least two pumping systems (2a, 2b) cooperating with at least one fixed contained (3, 3a, 3b), the transfer conveyor comprising a mechanical structure (10) equipped with wheels (11), a hooding device (12) on which said at least one fixed container (3, 3a, 3b) is fixed, the upper part (101) of said structure (10) allowing an operator to manoeuvre said transfer conveyor (1) to transport said at least one fixed container (3, 3a, 3b), and each pumping system (2a, 2b) being fixed to the structure (10), close to the upper part (101) of the structure (10), connected sealingly to a pumping tube (20, 20a, 20b) by a first pipe (202, 202a, 202b) and connectable sealingly to said at least one fixed contained (3, 3a, 3b) by a second pipe (23, 23a, 23b) to carry out cooking liquid transfer operations, **characterised in that** each pumping system (2a, 2b) is reversible, of manual or electrical or thermal or pneumatic type, one being for fresh cooking liquids and the other or once of the others being for used cooking liquids, the pumping system (2b) for fresh cooking liquids being separate from the pumping system (2a) for used cooking liquids.

2. Transfer conveyor (1) according to claim 1, **characterised in that** the pumping tube (20, 20a) of a pumping system (2a) intended for transferring a used crooking liquid from a cooking device to the fixed container (3, 3a) is equipped at its end in contact with the used cooking liquid:
- with a thermal safety system to prevent the execution of used cooking liquid transfer operations from the cooking device to the fixed container (3, 3a) above a prescribed temperature threshold for the used cooking liquid; and/or
- with a temperature measuring system to provide an operator with information representative of the temperature of the cooking liquid of the cooking device by means of an indicating device; and/or
- with a filtering system to present the introduction of undesirable solid waste into the fixed container (3, 3a) whether or not it comes from the cooking device; and/or
- with a closing system to prevent residues of cooking liquid in the pumping tube (20, 20a) flowing out onto the ground when the transfer operations are terminated.

3. Transfer conveyor (1) according to claim 2, **characterised in that** the temperature measuring system is of a direct contact or not.

4. Transfer conveyor (1) according to claim 2, **characterised in that** the filtering system is adjusted according to the grain size of the solid waste accepted in the used cooking liquid to be drained.

5. Transfer conveyor (1) according to claim 1, **characterised in that** the pumping tube (20b) of a pumping system (2b) intended four transferring a fresh cooking liquid from a fixed container (3, 3b) into a cooking device is equipped at its end in contact with the fresh cooking liquid:
- with a closing system to prevent residues of cooking liquid in the pumping tube (20b) from flowing out onto the ground when the transfer operations are terminated; and/or
- with a non-return valve to prevent a fresh cooking liquid from the fixed container (3, 3b) from being contaminated with a used cooking liquid when the operator adds fresh cooking liquid to his cooking device.

6. Transfer conveyor (1) according to one of claims 1 to 5, **characterised in that** the first pipe (202, 202a, 202b) is flexible and the second pipe (23, 23a, 23b) is rigid or flexible and may or may not be equipped with an anti-overflow rapid confection system (230, 230a, 230b) at the end in contact with an orifice for filling or draining the fixed container (3, 3a, 3b).

7. Transfer conveyor (1) according to one of claims 1 to 6, **characterised in that** the container (3) cooperating with the transfer conveyor (1) is fixed to the structure (10) oaf the transfer conveyor (1) in such a way that it is disposed on the lower part (102) of the structure (10) of the transfer conveyor fuzz and constituted at least of a material which is sufficiently rigid to contain a given volume of fresh or used cooking liquid.

8. Transfer conveyor (1) according to one of claims 1 to 6, **characterised in that** the container (3) cooperating with the transfer conveyor (1) is fixed to the structure (10) of the transfer conveyor (1) in such a way that it is disposed of the lower part (102) of the structure (10) of the transfer conveyor (1), constituted at least of a material which is sufficiently rigid and separated into two distinct volumes intended respectively to receive a fresh cooking liquid and a used cooking liquid.

9. Transfer conveyor (1) according to one of claims 1 to 7, **characterised in that** in the case in which the transfer conveyor (1) cooperate with two fixed containers (3a, 3b), the fixed containers (3a, 3b) are fixed to the structure (10) of the transfer conveyor (1) and constituted at least of a material which is sufficiently rigid such that the first container (3a) disposed on the lower part (102) of the structure (10) of the transfer conveyor (1) and stacked under the second contained (3b) receives a used cooking liquid and the second fixed container (3b) stacked on the first fixed container (3a) receives a fresh cooking liquid.

10. Use of the transfer conveyor (1) according to one of claim 1 to 9, **characterised in that** the transfer conveyor (1) provided with at least two pumping systems (2a, 2b) cooperating with at least one fixed container (3, 3a, 3b) is used to:
- transport the fixed container or containers (3, 3a, 3b) on a first circuit from a place of use of the cooking liquid to a place of storage of used cooking liquid, or on a second circuit from the place of storage of used cooking liquid to a place of storage of fresh cooking liquid or on a third circuit from the place of storage of fresh cooking liquid to the place of use of the fresh cooking liquid;
- drain, by means of a pumping system (2a), a used cooking liquid from a cooking device either into a fixed container (3) with a separable volume disposed on the holding device (12) of the transfer conveyor (1) or into a first fixed container (3a) disposed on the holding device (12) of the transfer conveyor (1) and stacked under a second fixed container (3b);
- fill, by means of the same pumping system (2a), a storage device for used cooking liquid with the used cooking liquid from either the fixed container (3) with the separable volume or from the first fixed container (3a);
- frill, by means of another pumping system (2b), a cooking device with a fresh cooking liquid from either the second volume of the fixed container (3) with the separable volume disposed on the holding device (12) of the transfer conveyor (1) or from the second fixed container (3b) stacked on the first fixed container (3a);
- drain, by means of the other pumping system (2b), the fresh cooking liquid from a storage device for fresh cooking liquid either into the second volume of the fixed container (3) with the separable volume or into the second fixed container (3b).

11. Use of the transfer conveyor (1) according to claim 10, **characterised in that** to execute fresh or used cooking liquid transfer operations, an operator connects one end of the second pipe (23, 23a, 23b), the other end of which is connected to the corresponding pumping system (2a, 2b), to the filling or draining orifice of the fixed container (3, 3a, 3b) then places the end (200, 200a, 200b) of the corresponding pumping tube (20a, 20b) in the cooking device or in the storage device for used cooking liquid or in the storage device for fresh cooking liquid according to the operation to be executed, and operates the corresponding pumping system (2a, 2b) in the desired direction.
